# EUROPÄISCHE PATENTANMELDUNG

(11) **EP 2 947 508 A1**
(43) Veröffentlichungstag der Anmeldung: **25.11.2015**
(21) Anmeldenummer: 15168341.4
(22) Anmeldetag: 20.05.2015
(51) Int. Cl.: G02F 1/15

(54) **ELEKTROCHROME ZELLE UND VERFAHREN ZU DEREN HERSTELLUNG**

(30) Priorität: 23.05.2014 DE 102014209891
(71) Anmelder: Innovent e.V., 07745 Jena (DE)
(72) Erfinder: Heft, Andreas, 07545 Gera (DE); Günther, Marlies, 07745 Jena (DE); Grünler, Bernd, 07937 Zeulenroda (DE); Gitter, Uwe, 07629 Hermsdorf (DE); Zunke, Ivo, 07745 Jena (DE); Schmidt, Jürgen, 07745 Jena (DE)
(74) Vertreter: Liedtke, Markus

(57) **Zusammenfassung**

Die Erfindung betrifft ein Verfahren zur Herstellung einer elektrochromen Zelle (1), umfassend:
- Bereitstellen zweier transparenter Substratscheiben (2.1, 2.2), welche jeweils auf einer Seite eine transparente, elektrisch leitende Schicht (3.1, 3.2) aufweisen, die jeweils mit einem äußeren elektrischen Anschluss (4.1, 4.2) verbunden oder verbindbar ist,
- Abscheiden eines elektrochromen Materials, insbesondere Wolframoxid (WOₓ), in einer elektrochromen Schicht (5.1) auf mindestens einer der transparenten, elektrisch leitenden Schichten (3.1, 3.2) mittels chemischer Gasphasenabscheidung,
- Anordnen einer ionenleitenden Schicht (6), enthaltend Polyvinylbutyral, und einen lithiumhaltigen Elektrolyten, auf der elektrochromen Schicht (5.1).

Die Erfindung betrifft weiter eine mittels des Verfahrens hergestellte elektrochrome Zelle.

## Beschreibung

Die Erfindung betrifft eine elektrochrome Zelle und Verfahren zu deren Herstellung.

Elektrochrome Zellen umfassen elektrochrome Materialien, deren optische Eigenschaften durch den Eintrag von Ionen und/oder Elektronen infolge des Anlegens einer elektrischen Spannung verändert werden können. Dabei wird die Farbänderung von Stoffen in dem elektrochromen Material durch eine elektrochemische Redoxreaktion bewirkt. Der reduzierte und der oxidierte Zustand der elektrochromen Substanz führen dabei zu unterschiedlichen Farbeindrücken. Grundsätzlich gibt es zwei verschiedene Arten von elektrochromen Übergangsmetalloxiden. Kathodisch elektrochrome Materialien sind optisch transparent und können durch Einlagerung von Ionen eingefärbt werden, anodisch elektrochrome absorbieren Licht und werden durch Einlagerung optisch transparent. Die unterschiedlichen Zustände können durch die Wirkung eines elektrischen Feldes eingestellt werden.

Solche elektrochromen Zellen können beispielsweise zur Abdunkelung von Fenstern, für abblendbare Spiegel oder Displays verwendet werden.

Elektrochrome Zellen sind beispielsweise aus DE 44 32 427 A1, DE 198 02 339 A1, DE 198 24 185 A1 und H. Wittkopf, Elektrochrome Beschichtungen - Sonnenschutzgläser der neuen Generation, Vak. Forsch. Prax 22 (2010) 26-30, R. Baetens, B.P. Jelle, A. Gustavsen, Properties, requirements and possibilities of smart windows for dynamic daylight and solar energy control in buildings: A state-of-the-art review, Sol. Energ. Mat. Sol. C 94 (2012) 87-105 bekannt.

Der Erfindung liegt die Aufgabe zu Grunde, eine verbesserte elektrochrome Zelle und ein verbessertes Verfahren zu deren Herstellung anzugeben.

Die Aufgabe wird erfindungsgemäß gelöst durch ein Verfahren mit den Merkmalen des Anspruchs 1 und durch eine elektrochrome Zelle mit den Merkmalen des Anspruchs 10.

Vorteilhafte Ausgestaltungen der Erfindung sind Gegenstand der Unteransprüche.

Erfindungsgemäß umfasst eine elektrochrome Zelle zwei transparente und beabstandet zueinander parallel angeordnete Substratscheiben, welche jeweils auf einer der jeweils anderen Substratscheibe zugewandten Seite eine transparente, elektrisch leitende Schicht aufweisen, die jeweils mit einem äußeren elektrischen Anschluss verbunden oder verbindbar ist, wobei zwischen den beiden transparenten, elektrisch leitenden Schichten mindestens eine elektrochrome Schicht und mindestens eine ionenleitende Elektrolytschicht angeordnet ist, wobei die mindestens eine elektrochrome Schicht ein elektrochromes Material, beispielsweise Wolframoxid (WOₓ), insbesondere Wolfram(VI)-oxid (WO₃) enthält, wobei die mindestens eine ionenleitende Elektrolytschicht elektrisch isolierendes Polyvinylbutyral (PVB), und einen Flüssigelektrolyten, insbesondere bestehend aus Tetraethylenglycoldimethylether (TEGDME) und Lithiumionen (Li⁺) enthält.

Bei Verwendung von Wolfram(VI)-oxid (WO₃) wird bei Anlegen einer Spannung das sechswertige Wolfram zu fünfwertigem Wolfram reduziert. Parallel dazu wandern angeregte Lithium⁺-Ionen in die das Wolfram enthaltende elektrochrome Schicht und bilden mit diesen LiₓWO₃ aus, so dass Farbzentren entstehen, die eine Blaufärbung bewirken. Diese Färbung ist umso deutlicher, je amorpher die Wolframoxidschicht ist. Die Kristallinität dieser Schicht kann über die Wahl des Abscheideverfahrens und deren Prozessparameter bestimmt werden.

In einer Ausführungsform der Erfindung ist beiderseits der ionenleitenden Elektrolytschicht jeweils eine elektrochrome Schicht angeordnet, von denen eine kathodisch ist und das WO₃ enthält, wobei die andere elektrochrome Schicht anodisch ist.

In einer anderen Ausführungsform der Erfindung ist auf einer Seite der ionenleitenden Elektrolytschicht die das WO₃ enthaltende elektrochrome Schicht angeordnet, wobei auf einer anderen Seite der ionenleitenden Elektrolytschicht eine ionenspeichernde Schicht angeordnet ist.

Beispielsweise kann die elektrochrome Schicht aus einer Reihe von Oxiden aus Übergangsmetallen aufgebaut sein. Anstelle von oder zusätzlich zu WOₓ, insbesondere WO₃ kann in der einen elektrochromen Schicht und/oder in den zwei elektrochromen Schichten mindestens einer der Stoffe Bi₂O₃, CeO₂, CoO, Cr₂O₃, CuO, FeOOH, Fe₂O₃, Fe₃O₄, FeO, MnO₂, MoO₃, NiO, P₂O_{2-y}, RhO₃, RuO₂, SnO₂, Ta₂O₅, TiO₂, V₂O₅, Ir(OH)₃, IrO₂ und Nb₂O₅ enthalten.

Einige dieser Stoffe, wie CeO₂ und TiO₂, verlieren auch beim Einbau von Li⁺ ihre Transparenz nicht während anodisch wirkenden Stoffe, wie Cr₂O₃, FeOOH, Fe₃O₄, NiO, IrO₂ absorbierend sind und durch Li⁺-Einbau entfärbt werden und somit zur Verstärkung des Farbeindrucks verwendet werden können.

In einer Ausführungsform der Erfindung kann die ionenleitende Elektrolytschicht zusätzlich TEGDME als Bestandteil enthalten.

Ein erfindungsgemäßes Verfahren zur Herstellung einer elektrochromen Zelle umfasst die Schritte:
- Bereitstellen zweier transparenter Substratscheiben, welche jeweils auf einer Seite eine transparente, elektrisch leitende Schicht aufweisen, die jeweils mit einem äußeren elektrischen Anschluss verbunden oder verbindbar ist,
- Abscheiden eines elektrochromen Materials, beispielsweise WOₓ, insbesondere zumindest teilweise WO₃ in einer elektrochromen Schicht auf mindestens einer der transparenten, elektrisch leitenden Schichten mittels chemischer Gasphasenabscheidung,
- Herstellen einer ionenleitenden Schicht enthaltend Polyvinylbutyral, und einen lithiumhaltigen Elektrolyten.

Die ionenleitende Schicht wird dann auf der mindestens einen elektrochromen Schicht angeordnet und die beiden transparenten Substratscheiben zusammengefügt.

Die Abscheidung des elektrochromen Materials kann bei Atmosphärendruck erfolgen. Auf diese Weise kann auf aufwendige Evakuierungstechnik verzichtet werden.

Die chemische Gasphasenabscheidung des elektrochromen Materials kann aus einer Flamme erfolgen (CCVD). Ebenso ist die Abscheidung aus einem Atmosphären-Plasma denkbar.

In einer Ausführungsform der Erfindung kann eine 0,01 mol/l Ammoniummetawolframat Hydrat Lösung in einer Mischung aus Methanol und Wasser gelöst und als Aerosol in einen Brenner gegeben werden, in dem das Aerosol umgesetzt und aus dessen Reaktion in der Flamme das WOₓ als Reaktionsprodukt auf der transparenten, elektrisch leitenden Schicht abgeschieden wird.

Die Zusammensetzung der WOₓ enthaltenden elektrochromen Schicht sowie ihre Schichtdicke können über einen Arbeitsabstand des Brenners zur zu beschichtenden Oberfläche, Verfahrgeschwindigkeit des Brenners relativ zur Oberfläche, Substrattemperatur, Luft/Brenngas-Verhältnis, Anzahl an Durchläufen und Aerosoldosierung eingestellt werden. Als Brenngas kann beispielsweise Propan verwendet werden.

In einer Ausführungsform der Erfindung wird die ionenleitende Schicht hergestellt, indem PVB in einem Lösungsmittel gelöst wird, wobei der Lösung anschließend TEGDME und ein Lithiumsalz zugesetzt wird, wobei die Lösung auf einer erwärmten Oberfläche abgedampft wird.

Beispielsweise kann herkömmliche PVB-Folie in Isopropanol oder mindestens einem anderen geeigneten Lösungsmittel wie beispielsweise andere Alkohole oder Tetrahydrofuran (THF) unter Rühren über einen Zeitraum von bis zu 2 Tagen bei einer Temperatur von etwa 40 °C bis 50 °C gelöst werden, so dass eine beispielsweise fünf bis zwölfprzentige, insbesondere zehnprozentige Lösung entsteht. Bezogen auf das Gewicht der gelösten PVB-Folie werden beispielsweise die folgenden Stoffe zugesetzt und, bis alle Bestandteile klar gelöst und/oder homogen vermischt sind, in der Lösung verrührt:
- TEGDME als Elektrolytbestandtteil 10 Gew.-% bis 30 Gew.-%, insbesondere etwa 20 Gew.-%,
- ein Lithiumsalz, beispielsweise Lithiumtrifluormethansulfonat 1 Gew-% bis 6 Gew.-%,
- gegebenenfalls weitere Bestandteile, beispielsweise Glyoxylsäure zum Funktionalisieren mit Säuregruppen

Der flüchtige Lösemittelanteil einer Portion, beispielsweise 10 g bis 20 g, dieser Lösung wird danach bei beispielsweise einer Temperatur von 150 °C bis 180 °C auf einer silikonbeschichteten Heizplatte abgedampft. Während dieser Phase kann gegebenenfalls anwesende Glyoxylsäure mit OH-Gruppen aus dem Polyvinylalkoholanteil des PVB Acetale bilden. Im Anschluss kann die gegebenenfalls noch blasige und unregelmäßige Schicht mittels eines beispielsweise mit Silikon beschichteten gewölbten Presswerkzeuges gerollt und in eine dünne Schicht gedrückt werden, so dass Gasblasen entweichen und ein Stück Folie in einer Dicke von beispielsweise 0,5 mm bis 1,5 mm entsteht, welches ionenleitend ist.

Statt der PVB-Folie könnte auch reines PVB, beispielsweise in Form eines Pulvers oder eines Granulats verwendet werden. Gegebenenfalls können in diesem Fall Zusatzstoffe, beispielsweise Antioxidantien, Stabilisatoren und/oder UV-Absorber, die in der PVB-Folie enthalten sind, der Lösung zugesetzt werden. Die ionenleitende Schicht kann auch ohne die Verwendung von Glyoxylsäure hergestellt werden. Insbesondere kann die Herstellung mit Hilfe eines Extruders oder ohne Verwendung eines Extruders erfolgen. Weiterhin kann der Zusatz von weiteren funktionalen Stoffen, beispielsweise Farbstoffen vorgesehen sein.

In einer Ausführungsform der Erfindung wird auf einer der transparenten, elektrisch leitenden Schichten WOₓ in der elektrochromen Schicht abgeschieden, wobei auf der anderen der transparenten, elektrisch leitenden Schichten CeO₂ in einer ionenspeichernden Schicht abgeschieden wird.

Die Substratscheiben oder - folien können Glas oder transparenten Kunststoff umfassen und starr oder flexibel ausgebildet sein.

Für den Schichtaufbau der elektrochromen Zelle ergeben sich insbesondere folgende Möglichkeiten:
- Substratscheibe; transparente, elektrisch leitende Schicht, elektrochrome Schicht; ionenleitende Elektrolytschicht; ionenspeichernde Schicht; transparente, elektrisch leitende Schicht; Substratscheibe
- Substratscheibe; transparente, elektrisch leitende Schicht, kathodische elektrochrome Schicht; ionenleitende Elektrolytschicht; anodische elektrochrome Schicht; transparente, elektrisch leitende Schicht; Substratscheibe
- Substratscheibe; transparente, elektrisch leitende Schicht, elektrochrome Schicht; ionenleitende Elektrolytschicht; transparente, elektrisch leitende Schicht; Substratscheibe

Die transparente, elektrisch leitende Schicht kann transparente, leitfähige Oxide (TCO) enthalten, beispielsweise Indium-Zinn-Oxid (ITO), Fluor-Zinn-Oxid (FTO) oder Aluminium-Zink-Oxid (AZO). Die transparenten, leitfähigen Oxide können beispielsweise mittels Sputtern, chemische Gasphasenabscheidung (CVD), physikalische Gasphasenabscheidung (PVD), Laserstrahlverdampfen (PLD), Aufdampfen oder Atomlagenabscheidung (ALD) aufgebracht werden. In der kathodischen elektrochromen Schicht kann alternativ oder zusätzlich zu WO₃ auch mindestens einer der Stoffe Bi₂O₃, CeO₂, CoO, Cr₂O₃, CuO, FeOOH, Fe₂O₃, Fe₃O₄, FeO, MnO₂, MoO₃, NiO, P₂O_{2-y}, RhO₃, RuO₂, SnO₂, Ta₂O₅, TiO₂, V₂O₅, Ir(OH)₃, IrO₂ und Nb₂O₅ abgeschieden werden.

Die elektrochrome Zelle kann beispielsweise zur Abdunkelung von Fenstern in Gebäuden, Fahrzeugen, Flugzeugen oder in abblendbaren Spiegeln oder Displays verwendet werden. Die Abdunkelung von Fenstern kann zum Sonnenschutz und/oder zur Temperaturregulierung der hinter dem Fenster liegenden Räume verwendet werden.

Ausführungsbeispiele der Erfindung werden im Folgenden anhand einer Zeichnung näher erläutert.

Darin zeigt:

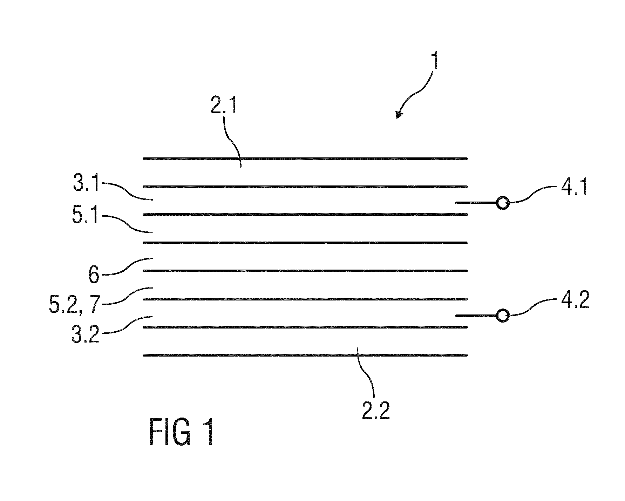

- Figur 1: eine schematische Schnittansicht einer erfindungsgemäßen elektrochromen Zelle.

**Figur 1** zeigt eine schematische Schnittansicht einer erfindungsgemäßen elektrochromen Zelle 1. Erfindungsgemäß umfasst die elektrochrome Zelle zwei transparente und beabstandet zueinander parallel angeordnete Substratscheiben 2.1, 2.2, welche jeweils auf einer der jeweils anderen Substratscheibe 2.1, 2.2 zugewandten Seite eine transparente, elektrisch leitende Schicht 3.1, 3.2 aufweisen, die jeweils mit einem äußeren elektrischen Anschluss 4.1, 4.2 verbunden ist, wobei zwischen den beiden transparenten, elektrisch leitenden Schichten 3.1, 3.2 mindestens eine elektrochrome Schicht 5.1 und mindestens eine ionenleitende Elektrolytschicht 6 angeordnet ist, wobei die mindestens eine elektrochrome Schicht WOₓ enthält, wobei die mindestens eine ionenleitende Elektrolytschicht Polyvinylbutyral und Lithium enthält.

In einer Ausführungsform der Erfindung ist beiderseits der ionenleitenden Elektrolytschicht 6 jeweils eine elektrochrome Schicht 5.1, 5.2 angeordnet, wobei eine der elektrochromen Schichten 5.1 kathodisch ist und das WOₓ enthält, wobei die andere der elektrochromen Schichten 5.2 anodisch ist.

In einer anderen Ausführungsform der Erfindung ist auf einer Seite der ionenleitenden Elektrolytschicht 6 die das WOₓ enthaltende elektrochrome Schicht 5.1 angeordnet, wobei auf einer anderen Seite der ionenleitenden Elektrolytschicht 6 eine ionenspeichernde Schicht 7 angeordnet ist.

### Ausführungsbeispiel 1

Auf einer aus Glas bestehenden oder Glas umfassenden Substratscheibe 2.1 mit einer transparenten, elektrisch leitenden Schicht 3.1 umfassend Indium-Zinn-Oxid (ITO) mit etwa 75 Ohm Schichtwiderstand wird WOₓ in einer elektrochromen Schicht 5.1 mittels Flammenpyrolyse abgeschieden. Dabei beträgt ein Brenngas/Luft-Verhältnis etwa 1,0:20. Als Brenngas wird Propan verwendet. Als Precursor wird Ammoniummetawolframat Hydrat in einer Mischung aus Methanol und Wasser gelöst (beispielsweise 0,01 mol/l Ammoniummetawolframat Hydrat bezogen auf die Mischung aus Methanol und Wasser) und als Aerosol in einen Brenner gegeben (Pumprate 1 ml/min), in dem das Aerosol umgesetzt und aus dessen Flamme das WOₓ als Reaktionsprodukt auf der transparenten, elektrisch leitenden Schicht 3.1 abgeschieden wird. Der Brenner wird mit einem Abstand von 7 mm und einer Verfahrgeschwindigkeit von 50 mm/s über die Substratscheibe 2.1 geführt, wobei 20 Durchläufe durchgeführt werden. Auf der entstandenen elektrochromen Schicht 5.1 wird eine ionenleitende Schicht 6 angeordnet, die als PVB-Folie mit 10 Gew.-% bis 30 Gew.-%, insbesondere etwa 20 Gew.-% TEGDME, 1 Gew.-% bis 6 Gew-%, insbesondere 6 Gew.-% Lithiumsalz, insbesondere Lithiumtrifluormethansulfonat ausgebildet ist. Ohne dass eine Ionenspeicherschicht oder eine weitere elektrochrome Schicht erforderlich ist, kann dann eine weitere elektrisch leitende Schicht 3.2 und eine weitere Substratscheibe 2.2 folgen, um die elektrochrome Zelle 1 zu vervollständigen.

### Ausführungsbeispiel 2

Auf einer aus Glas bestehenden oder Glas umfassenden Substratscheibe 2.1 mit einer transparenten, elektrisch leitenden Schicht 3.1 umfassend Indium-Zinn-Oxid (ITO) mit etwa 75 Ohm Schichtwiderstand wird WOₓ in einer elektrochromen Schicht 5.1 mittels Flammenpyrolyse abgeschieden. Dabei beträgt ein Brenngas/Luft-Verhältnis etwa 1,0:20. Als Brenngas wird Propan verwendet. Als Precursor wird Ammoniummetawolframat Hydrat in einer Mischung aus Methanol und Wasser gelöst (beispielsweise 0,01 mol/l Ammoniummetawolframat Hydrat bezogen auf die Mischung aus Methanol und Wasser) und als Aerosol in einen Brenner gegeben (Pumprate 1 ml/min), in dem das Aerosol verbrannt und aus dessen Flamme das WOₓ als Reaktionsprodukt auf der transparenten, elektrisch leitenden Schicht 3.1 abgeschieden wird. Der Brenner wird mit einem Abstand von 7 mm und einer Verfahrgeschwindigkeit von 50 mm/s über die Substratscheibe 2.1 geführt, wobei 20 Durchläufe durchgeführt werden. Auf der entstandenen elektrochromen Schicht 5.1 wird eine ionenleitende Schicht 6 angeordnet, die als Polyvinylbutyral-Folie (PVB) mit 10 Gew.-% bis 30 Gew.-%, insbesondere etwa 20 Gew.-% TEGDME, 1 Gew.-% bis 6 Gew.-%, insbesondere 6 Gew.-% Lithiumsalz, insbesondere Lithiumtrifluormethansulfonat ausgebildet ist. Weiter kann mittels chemischer Gasphasenabscheidung aus der Flamme eine dünne SiOₓ-Zwischenschicht zur elektrischen Isolation abgeschieden werden. Ohne dass eine Ionenspeicherschicht oder eine weitere elektrochrome Schicht erforderlich ist, kann dann eine weitere elektrisch leitende Schicht 3.2 und eine weitere Substratscheibe 2.2 folgen, um die elektrochrome Zelle 1 zu vervollständigen.

### Ausführungsbeispiel 3

Auf einer aus Glas bestehenden oder Glas umfassenden Substratscheibe 2.1 mit einer transparenten, elektrisch leitenden Schicht 3.1 umfassend Indium-Zinn-Oxid (ITO) mit etwa 75 Ohm Schichtwiderstand wird WOₓ in einer elektrochromen Schicht 5.1 mittels Flammenpyrolyse abgeschieden. Dabei beträgt ein Brenngas/Luft-Verhältnis etwa 1,0:20. Als Brenngas wird Propan verwendet. Als Precursor wird Ammoniummetawolframat Hydrat in einer Mischung aus Methanol und Wasser gelöst (beispielsweise 0,01 mol/l Ammoniummetawolframat Hydrat bezogen auf die Mischung aus Methanol und Wasser) und als Aerosol in einen Brenner gegeben (Pumprate 1 ml/min), in dem das Aerosol verbrannt und aus dessen Flamme das WOₓ als Reaktionsprodukt auf der transparenten, elektrisch leitenden Schicht 3.1 abgeschieden wird. Der Brenner wird mit einem Abstand von 7 mm und einer Verfahrgeschwindigkeit von 100 mm/s über die Substratscheibe 2.1 geführt, wobei 30 Durchläufe durchgeführt werden. Auf der entstandenen elektrochromen Schicht 5.1 wird eine ionenleitende Schicht 6 angeordnet, die als Polyvinylbutyral-Folie (PVB) mit 10 Gew.-% bis 30 Gew.-%, insbesondere etwa 20 Gew.-% TEGDME, 1 Gew.-% bis 6 Gew.-%, insbesondere 6 Gew.-% Lithiumsalz, insbesondere Lithiumtrifluormethansulfonat ausgebildet ist. Weiter kann mittels Flammenpyrolyse eine Ionenspeicherschicht 7, umfassend CeOₓ, insbesondere CeO₂ abgeschieden werden. Dabei beträgt ein Brenngas/Luft-Verhältnis etwa 1,0:20. Als Brenngas wird Propan verwendet. Als Precursor wird Cer(III)-chlorid Heptahydrat mit einer Pumprate von 0,5 ml/min in einen Brenner gegeben, aus dessen Flamme das CeOₓ als Reaktionsprodukt auf der ionenleitenden Schicht 6 abgeschieden wird. Der Brenner wird mit einem Abstand von 7 mm und einer Verfahrgeschwindigkeit von 50 mm/s über die ionenleitende Schicht 6 geführt, wobei 50 Durchläufe durchgeführt werden. Anschließend kann eine weitere elektrisch leitende Schicht 3.2 und eine weitere Substratscheibe 2.2 folgen, um die elektrochrome Zelle 1 zu vervollständigen.

### BEZUGSZEICHENLISTE

- 1: elektrochrome Zelle
- 2.1: Substratscheibe
- 2.2: Substratscheibe
- 3.1: elektrisch leitende Schicht
- 3.2: elektrisch leitende Schicht
- 4.1: elektrischer Anschluss
- 4.2: elektrischer Anschluss
- 5.1: elektrochrome Schicht
- 5.2: elektrochrome Schicht
- 6: ionenleitende Elektrolytschicht
- 7: ionenspeichernde Schicht

## Patentansprüche

1. Verfahren zur Herstellung einer elektrochromen Zelle (1), umfassend:
- Bereitstellen zweier transparenter Substratscheiben (2.1, 2.2), welche jeweils auf einer Seite eine transparente, elektrisch leitende Schicht (3.1, 3.2) aufweisen, die jeweils mit einem äußeren elektrischen Anschluss (4.1, 4.2) verbunden oder verbindbar ist,
- Abscheiden eines elektrochromen Materials, insbesondere Wolframoxid (WOₓ), in einer elektrochromen Schicht (5.1) auf mindestens einer der transparenten, elektrisch leitenden Schichten (3.1, 3.2) mittels chemischer Gasphasenabscheidung,
- Anordnen einer ionenleitenden Schicht (6), enthaltend Polyvinylbutyral, und einen lithiumhaltigen Elektrolyten, auf der elektrochromen Schicht (5.1).

2. Verfahren nach Anspruch 1, wobei das elektrochrome Material bei Atmosphärendruck abgeschieden wird.

3. Verfahren nach einem der Ansprüche 1 oder 2, wobei das elektrochrome Material aus einer Flamme abgeschieden wird.

4. Verfahren nach Anspruch 3, wobei Ammoniummetawolframat Hydrat in einer Mischung aus Methanol und Wasser gelöst und als Aerosol in einen Brenner gegeben wird.

5. Verfahren nach einem der Ansprüche 1 bis 4, wobei die ionenleitende Elektrolytschicht (6) hergestellt wird, indem Polyvinylbutyral in einem Lösungsmittel gelöst wird, wobei der Lösung anschließend eine oder mehrere der Verbindungen Tetraethylenglycoldimethylether, andere Glycolether, -ester oder Glycole, weichmachende Diester von Dicarbonsäuren mit höheren Alkoholen, insbesondere Dibutylsebacat, Phosphorsäuretriester und Glycerinester zugesetzt wird.

6. Verfahren nach Anspruch 5, wobei die Verbindung oder die mehreren Verbindungen der Lösung in einer Menge von 10 % bis 50 % zugesetzt wird/werden.

7. Verfahren nach einem der Ansprüche 5 oder 6, wobei der Lösung weiter ein ein Lithiumsalz in einer Menge von 0,1 % bis 10 % zugesetzt wird.

8. Verfahren nach einem der Ansprüche 5 bis 7, wobei das Lösungsmittel auf einer erwärmten Oberfläche abgedampft wird.

9. Verfahren nach einem der Ansprüche 1 bis 8, wobei auf einer der transparenten, elektrisch leitenden Schichten (3.1, 3.2) Wolframoxid (WOₓ) in der elektrochromen Schicht (5.1) abgeschieden wird, wobei auf der anderen der transparenten, elektrisch leitenden Schichten (3.1, 3.2) CeO₂ in einer ionenspeichernden Schicht (7) abgeschieden wird.

10. Elektrochrome Zelle (1), hergestellt mittels eines Verfahrens nach einem der vorhergehenden Ansprüchen, umfassend zwei transparente und beabstandet zueinander parallel angeordnete Substratscheiben (2.1, 2.2), welche jeweils auf einer der jeweils anderen Substratscheibe (2.1, 2.2) zugewandten Seite eine transparente, elektrisch leitende Schicht (3.1, 3.2) aufweisen, die jeweils mit einem äußeren elektrischen Anschluss (4.1, 4.2) verbunden oder verbindbar ist, wobei zwischen den beiden elektrisch leitenden Schichten (3.1, 3.2) mindestens eine flammenpyrolytisch erzeugte elektrochrome Schicht (5.1, 5.2) und mindestens eine ionenleitende Elektrolytschicht (6) angeordnet ist, wobei die mindestens eine elektrochrome Schicht (5.1) ein elektrochromes Material, insbesondere Wolframoxid (WOₓ) enthält, wobei die mindestens eine ionenleitende Elektrolytschicht (6) Polyvinylbutyral und Lithium enthält.
